# EUROPEAN PATENT APPLICATION

(11) **EP 1 788 565 A1**
(43) Date of publication of application: **23.05.2007**
(21) Application number: 05300929.6
(22) Date of filing: 16.11.2005
(51) Int. Cl.: G11B 7/14

(54) **Method for fast optical reading and recording**

(71) Applicant: Thomson Licensing S.A., 92100 Boulogne-Billancourt (FR)
(72) Inventor: Bruckert, Sebastien, 21130, Auxonne (FR); Raulin, Philippe, 21110, Tart (FR); Leclaire, Alain, 89230 Venouse (FR); Cattaneo, Celine, 21490, Bellefond (FR)
(74) Representative: Thies, Stephan

(57) **Abstract**

The present invention relates to a method for optical reading and/or recording using two or more optical pickups (11, 12, 13, 14, 15) with an reduced recording/reading time, and to an apparatus for reading from and/or writing to optical recording media using such method.

According to the invention, the optical recording medium is driven with a constant linear velocity relative to the pickup (15) located closest to the outer rim of the optical recording medium.

## Description

The present invention relates to a method for fast optical reading and/or recording using two or more optical pickups and to an apparatus for reading from and/or writing to optical recording media using such method.

Nowadays a plurality of devices for reading from and/or writing to optical recording media are available to consumers, e.g. for CD (Compact Disk) or DVD (Digital Versatile Disk). These devices are typically able to read or write in a couple of modes, e.g. constant angular velocity (CAV), which is used for example by CD-ROM drives, constant linear velocity (CLV), which is used by audio CD players and video DVD players, zone constant linear velocity (ZCLV), which is often used by CD and DVD recorders, or partial constant angular velocity (PCAV), which is likewise used by CD and DVD recorders. Generally the devices allow to read from and/or write to a recording medium with an increased speed using a higher rotation speed of the optical recording medium, e.g. 2X, 4X, 8X etc., where X denotes the nominal speed associated to the recording medium. While reading can generally be performed at even higher rotation speeds, the rotation speed for recording is still limited by the available recording media. For recording a two hours movie on a DVD a 8X recorder needs approximately 15 minutes. While this is acceptable for a consumer electronics device, there are circumstances where the time needed for recording has to be reduced even more. For example, US 2004/0064377 discloses a Kiosk machine that allows customers to browse a movie database, view movie descriptions, and then have a copy of the movie recorded on a DVD disk. For such a system a recording time of approximately one minute is desirable.

Instead of or in addition to using an increased rotation speed, it has been proposed for example in JP 11-167762 to use multiple pickups for simultaneously accessing different parts of an optical disk. In this case the optical disk is driven at constant angular velocity, as this mode can easily be implemented for two or more pickups. When an optical disk intended to be played back at constant linear velocity, e.g. a video DVD, is to be recorded with such a drive, a CAV image of the CLV data needs to be generated. The recording time of such a multi-pickup drive is limited by the pickup at the outermost position, as the recording speed is highest at this position. With CAV recording the maximum speed is in fact only achieved at the outer rim of the data area of the optical disk. The achievable recording time is thus not optimum.

It is an object of the invention to propose a method and an apparatus for reading from and/or writing to optical recording media using multiple pickups, which achieves a reduced recording time.

According to the invention, this object is achieved by a method for reading from and/or writing to optical recording media with two or more pickups at the same time, wherein the optical recording medium is driven with a constant linear velocity relative to the pickup located closest to the outer rim of the optical recording medium.

An apparatus according to the invention for reading from and/or writing to optical recording media with two or more pickups at the same time has means for driving the optical recording medium with a constant linear velocity relative to the pickup located closest to the outer rim of the optical recording medium.

The velocity model according to the invention (multi head linear velocity, MHLV) ensures that the fastest possible operating speed is achieved for the outermost pickup for its complete access range. In this context the outermost pickup is to be understood as the pickups closest to the outer rim of the optical recording medium, which is actually used for reading or writing. If only a part of the optical recording medium is read or written, one or more of the pickups may remain unused. All data written or read by this outermost pickup are written or read in CLV mode. The speed of the data written or read by the other pickups depends on this constant linear velocity. It is neither CAV nor CLV. Of course, the data need to be prepared accordingly before writing, or need to be processed accordingly after reading. If the optical recording medium is in fact intended to be driven at constant angular velocity, a formatter has to generate a data image for writing to the optical recording medium of the original CAV data for all pickups. Similarly, when data are read from the optical recording medium in accordance with the new velocity model, the formatter needs to generate a CAV data image from the read data. If, however, the optical recording medium is in fact intended to be driven at constant linear velocity, the formatter has to generate a data image for writing to the optical recording medium of the original CLV data for all pickups except the outermost pickup. Likewise, upon reading the formatter has to generate a CLV data image from the read data for all pickups except the outermost pickup. Advantageously, for writing the necessary data image of the original CLV data or the original CAV data is generated beforehand and delivered to the apparatus. This is especially interesting if the data image is provided by an external source, e.g. a central server or a data source which is connected to the apparatus. This has the advantage that the apparatus does not need to generate the data image itself, which reduces the necessary processing power of the apparatus. In addition, the special data format of the data image reduces the risk that a potential hacker uses the data for making illegal copies, especially if the recording apparatus is used in a public environment, e.g. a DVD kiosk as described before. A hacker cannot directly use the data image for making copies, as the data first have to be retransformed to original data.

An optical recording medium advantageously is adapted to the velocity model according to the invention. This adaptation consists, for example, in locating data, which require or allow high speed reading such as video data for rapidly changing scenes or large data files, closer to the outer rim of the optical recording medium, while data that do not require or allow high speed reading, e.g. menu data, control data, or small files, are located distant from the outer rim. During writing data which are more error tolerant are advantageously written closer to the outer rim, while data that are less error tolerant are written distant from the outer rim. This ensures that disturbances caused by writing errors, whose probability increases with increasing recording speed, are largely avoided.

In case an optical recording medium includes both prerecorded data and a data area for recording, which is divided into two or more rings, the prerecorded data is preferably provided at the radially inner part of at least two of the rings. In this way the data can be simultaneously read by two or more pickups, which increases the reading speed. In addition, this arrangement also ensures that during recording all pickups can be simultaneously used, as none of the pickups encounters an area which is completely filled with prerecorded data.

Preferably, the movement of at least some of the pickups is coupled, i.e. two or more pickups are moved synchronously relative to the optical recording medium. This is achieved, for example, by mounting two or more pickups on a single base, or by coupling the coarse drives of some of the pickups, either mechanically or electronically. The coupled movement of the pickups simplifies the generation of the data image.

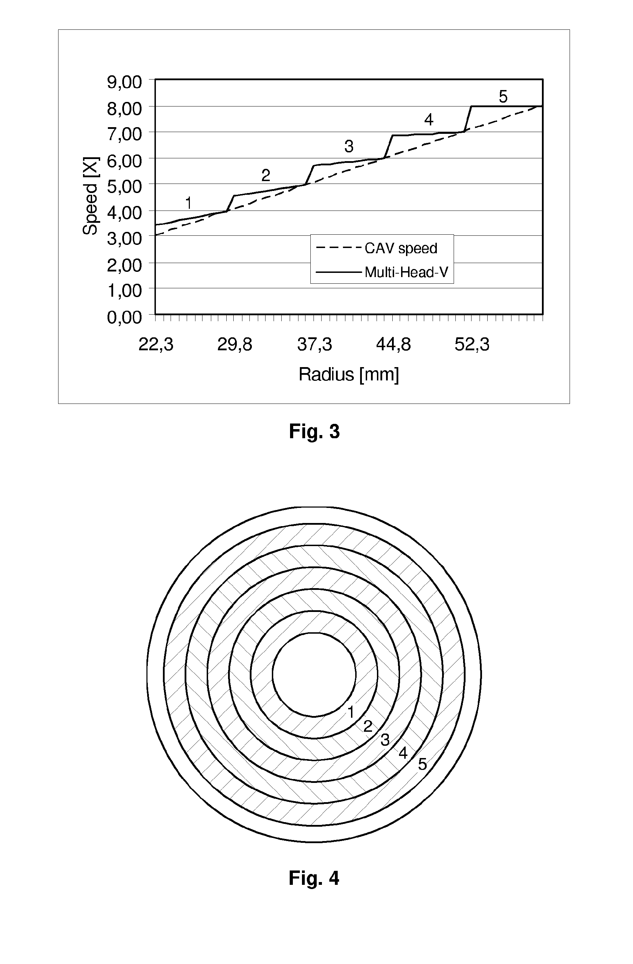

Advantageously, the access ranges of the two or more pickups on the optical recording medium overlap at least partially. On the one hand, this allows to compensate for a malfunction of one or more of the pickups. On the other hand, this allows to distribute the area to be read or written evenly over some or all of the pickups, e.g. in case only a part of the optical recording medium is to be read or written. In this case first the size of the area to be read or written is determined, e.g. from the amount of data to be read or written. Then the allocation of the different pickups is computed, taking into account the possible access range of the individual pickups. An example of such an allocation is given below with reference to Fig. 4a).

Alternatively, when only a part of the optical recording medium is to be read or written, the outermost pickup only reads or writes a part of its access range. As soon as the outermost pickups has finished reading or writing, the next inner pickup is considered the outermost pickup and the velocity is increased accordingly. An example for this solution is depicted in Fig. 4b). The same idea can be realized by shifting the data towards the outer rim of the optical recording medium. In this case the outermost pickup reads or writes its complete access range, while the innermost pickup only reads or writes a part of its access range. This is shown in Fig. 4c). Depending on the type of optical recording medium a jump command is recorded at the beginning of the data area of the optical recording medium for indicating to a reading device where the beginning of the data is to be found.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: shows a three-dimensional view of a drive with five pickups,

- Fig. 2: shows a schematic view of the five pickups relative to an optical recording medium,
- Fig. 3: shows the results of a simulation of the recording/reading speed of the five pickups,
- Fig. 4: depicts a first exemplary pickup allocation when only a part of the optical recording medium is read or written,
- Fig. 5: depicts a second exemplary pickup allocation when only a part of the optical recording medium is read or written, and
- Fig. 6: depicts a third exemplary pickup allocation when only a part of the optical recording medium is read or written.

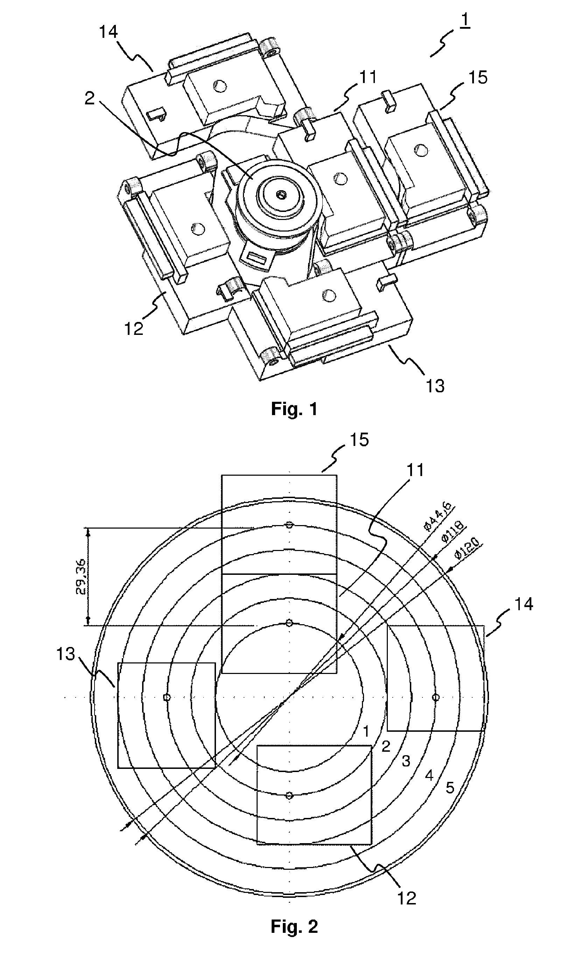

In Fig. 1 a three-dimensional view of a drive 1 with five pickups 11, 12, 13, 14, 15 is shown. The pickups are arranged crosswise around a disk table 2, whereby two pickups 11, 15 are arranged on a common axis. These two pickups are either combined and moved together, or they are separate and movable independently. In the figure, the different pickups are arranged exactly crosswise, i.e. the directions of movement of adjacent pickups form a right angle. However, it is likewise possible to arrange at least one of the pickups at an angle with regard to the crosswise arrangement, e.g. such that the direction of movement forms an angle of 75° and 105° with the directions of movement of the adjacent pickups.

A schematic view of the five pickups relative to an optical recording medium is shown in Fig. 2. Depicted are the five pickups with their respective light spots for reading and/or writing, and an optical recording medium, in this case a DVD. The figure shows a bottom view of the drive in the direction of the data area of the optical recording medium. Therefore, the positions of two of the pickups 13, 14 are swapped. Also shown in the figure are the outer diameter of the optical recording medium (120mm) and the inner and outer diameter of the data area of the optical recording medium (44,6mm and 118mm, respectively). The data area is separated into five concentric areas designated by the numerals 1 to 5. Each data area is accessed by a corresponding pickup. In this arrangement the pitch between the lenses of the different pickups in order to cover the complete data area is 7.34mm. The writing time of a DVD+RW driven at 8X is 2min. The writing time of a DVD+RW driven at 16X is 1min.

Fig. 3 depicts the results of a simulation of the recording/reading speed of the five pickups when the outermost pickup 15 is driven at eight times the nominal constant linear velocity of the optical recording medium. In this example the optical recording medium is a DVD. The x-axis indicates the radius on the optical recording medium in mm, whereas the y-axis indicates the recording/reading speed in multiples of the nominal constant linear velocity. The numerals 1 to 5 illustrate the segments of the data area covered by the different pickups. For comparison the recording/reading speed of the pickups when the optical recording medium is driven at constant angular velocity is also illustrated in the figure. In this case the constant angular velocity is chosen such that the velocity equals an 8x constant linear velocity at the outer rim of the data area. Of course, for the new speed mode the outermost pickup 15 in this example achieves 8x the nominal constant linear velocity over its whole access range. For the remaining pickups 11, 12, 13, 14, the speed increases over their respective access ranges with increasing radius. It can well be seen that the speed is always larger than the speed achieved when operating at constant angular velocity. At a speed of 8x the recording/reading time of a DVD+RW is 1min 53sec, which means a reduction of almost 6%. Similarly, the recording/reading time of a DVD+RW driven at 16X is reduced to 56.6sec.

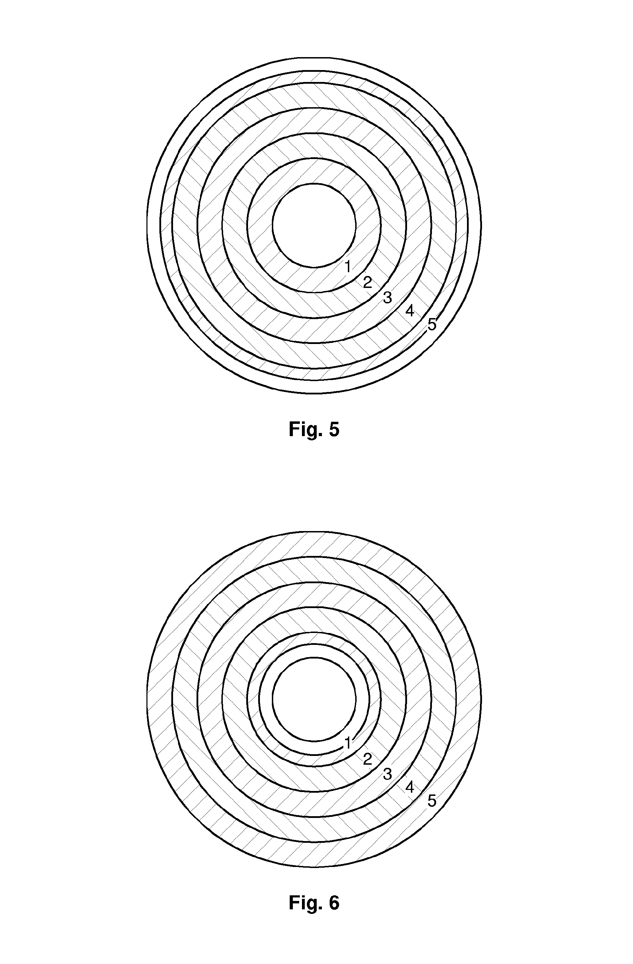

Figs. 4 to 6 depict three exemplary pickup allocations when only a part of the optical recording medium is read or written using five pickups. In Fig. 4 the area to be read or written is distributed evenly over the pickups, as indicated by the hatched areas. In case this is not possible due to the limited access ranges of the pickups, it is likewise possible to distribute the area over only some of the pickups. As an alternative, in the example in Fig. 5 the outermost pickup only reads or writes a part of its access range. When the outermost pickups has finished reading or writing, the next inner pickup is considered the outermost pickup and the velocity is increased accordingly. A further alternative is shown in Fig. 6. In this case the outermost pickup reads or writes its complete access range, while the innermost pickup only reads or writes a part of its access range.

## Claims

1. Method for reading from and/or writing to optical recording media with two or more pickups (11, 12, 13, 14, 15) at the same time, **wherein** the optical recording medium is driven with a constant linear velocity relative to the pickup (15) located closest to the outer rim of the optical recording medium.

2. Method according to claim 1, **further** having the step of coupling the movement relative to the optical recording medium of at least two pickups (11, 15).

3. Method according to claim 1 or 2, **wherein** the optical recording medium is intended to be driven with a constant angular velocity or a constant linear velocity.

4. Method according to claim 3, **further** including the step of generating a data image for writing to the optical recording medium from original CAV data or original CLV data or generating a CAV data image or a CLV data image from data read from the optical recording medium.

5. Apparatus for reading from and/or writing to optical recording media with two or more pickups (11, 12, 13, 14, 15) at the same time, **having** means for driving the optical recording medium with a constant linear velocity relative to the pickup (15) located closest to the outer rim of the optical recording medium.

6. Apparatus according to claim 5, wherein the movement relative to the optical recording medium of at least two pickups (11, 15) is coupled.

7. Apparatus according to claim 5 or 6, **wherein** the optical recording medium is intended to be driven with a constant angular velocity or a constant linear velocity.

8. Apparatus according to claim 8, **further** including a formatter for generating a data image for writing to the optical recording medium from original CAV data or original CLV data or generating a CAV data image or a CLV data image from data read from the optical recording medium.

9. Method for providing an apparatus for writing to optical recording media with two or more pickups (11, 12, 13, 14, 15) at the same time with multimedia content for writing, **having** the steps of:
- generating a data image from original CAV data or original CLV data, the data image corresponding to a writing operation where an optical recording medium is driven with a constant linear velocity relative to the pickup (15) located closest to the outer rim of the optical recording medium, and
- delivering the data image to the apparatus.

10. Optical recording medium having data recorded in a data area, **characterized in that** the data are shifted towards the outer rim of the optical recording medium.

11. Optical recording medium having data recorded in a data area, **wherein** data that require or allow high speed reading are located closer to the outer rim of the optical recording medium, while data that do not require or allow high speed reading are located distant from the outer rim of the optical recording medium.

12. Optical recording medium having prerecorded data as well as an area for data recording, **wherein** the area for data recording is divided into two or more rings, and wherein the prerecorded data is provided at the radially inner part of at least two of said rings.
